# EUROPÄISCHE PATENTSCHRIFT

(11) **EP 0 913 669 B1**
(45) Veröffentlichungstag und Bekanntmachung des Hinweises auf die Patenterteilung: **24.03.2004**
(21) Anmeldenummer: 98119619.9
(22) Anmeldetag: 16.10.1998
(51) Int. Cl.: G01D 5/347

(54) **Verfahren zum Anbringen einer Winkelteilung an einer Teilscheibe für Rotationsmesssysteme**
Procedure to provide an angle indexing on a circular indexing disc for rotation measuring devices
Procédé de fabrication d'une division angulaire sur un plateau diviseur pour dispositif de mesure de rotation

(30) Priorität: 31.10.1997 DE 19748292
(43) Veröffentlichungstag der Anmeldung: 06.05.1999
(73) Patentinhaber: Dr. Johannes Heidenhain GmbH, 83301 Traunreut (DE); Franz, Heinz-Günther, 22359 Jena (DE)
(72) Erfinder: Freitag, Hans-Joachim, 07749 Jena (DE); Franz, Heinz Günther, 22359 Hamburg (DE)
(74) Vertreter: Geyer, Werner, Dr.-Ing.

(56) Entgegenhaltungen:
- EP-A- 0 779 515
- DE-U- 29 622 996
- US-A- 5 126 560
- PATENT ABSTRACTS OF JAPAN vol. 005, no. 107 (P-070), 11. Juli 1981 (1981-07-11) & JP 56 049916 A (MUTOH IND LTD), 6. Mai 1981 (1981-05-06)
- PATENT ABSTRACTS OF JAPAN vol. 018, no. 189 (P-1721), 31. März 1994 (1994-03-31) & JP 06 003160 A (TOKYO ELECTRIC CO LTD), 11. Januar 1994 (1994-01-11)
- PATENT ABSTRACTS OF JAPAN vol. 018, no. 092 (P-1693), 15. Februar 1994 (1994-02-15) & JP 05 296789 A (MATSUSHITA ELECTRIC IND CO LTD), 9. November 1993 (1993-11-09)
- PATENT ABSTRACTS OF JAPAN vol. 011, no. 252 (P-605), 15. August 1987 (1987-08-15) & JP 62 057140 A (SEIKO EPSON CORP), 12. März 1987 (1987-03-12)

## Beschreibung

Die Erfindung bezieht sich auf ein Verfahren zum Anbringen einer Winkelteilung an einer Teilscheibe für Rotationsmeßsysteme, wobei die Teilscheibe mit einer zentralen Öffnung zum Aufstecken auf eine Trägerwelle versehen ist, bei dem die Teilscheibe auf eine Referenzwelle aufgesteckt und danach die Winkelteilung exakt zur Mittelachse der Referenzwelle zentriert auf die Teilscheibe aufgebracht wird.

Teilscheiben als Teilungs- oder Code-Träger werden bei Rotationsmeßsystemen zur Messung der Drehlage zweier relativ zueinander beweglicher Objekte eingesetzt, z. B. zur Messung von Winkeln, Drehwegen o. ä. Dabei Wird die auf der Teilscheibe angebrachte Winkelteilung, die sich relativ zu einer Abtasteinheit dreht, von dieser abgetastet und die gewonnenen Abtastinformationen werden dann mittels einer Auswerteeinheit in entsprechende Informationen, z. B. Drehwinkelinformationen o. ä., umgeformt. Die Abtastung erfolgt dabei über geeignete Abtastverfahren, wobei insbesondere fotoelektrische, magnetische, induktive oder kapazitative Abtastungen Anwendung finden. Allen Verfahren ist jedoch im Grundprinzip gemeinsam, daß die in der Regel periodische (inkrementale) Winkelteilung zur Drehachse der Teilscheibe zentriert sein muß, wodurch die Abtastinformation ein Maß für die relative Drehlage der beiden zueinander beweglichen Objekte darstellt. Bei absoluten Winkelmeßsystemen oder bei Drehgebern wird die absolute Drehwinkelinformation im allgemeinen aus den Drehwinkelinformationen einer Vielzahl von Winkelteilungen, die konzentrisch auf der Teilscheibe angeordnet sind, gewonnen.

Die erreichbare Drehwinkelmeßgenauigkeit wird maßgeblich u. a. durch die Genauigkeit der Winkelteilung und durch die infolge der Exzentrizität der Teilung zur Lagerung, d. h. zur Drehachse der aufnehmenden Trägerwelle, auftretenden Abweichungen bestimmt.

Die auf die Teilscheiben aufzubringenden Winkelteilungen lassen sich, insbesondere für fotoelektrische Abtastprinzipien, in sehr hoher Genauigkeit kostengünstig herstellen. So werden z. B. Standard-Inkrementalscheiben bereits mit einer Winkelteilgenauigkeit < 2 Winkelsekunden serienmäßig angeboten.

Weitaus größer und vielschichtiger ist jedoch das Problem der Exzentrizität der Teilung zur Lagerung bzw. zur Drehachse der Trägerwelle. Je nach der angestrebten Winkelmeßgenauigkeit und Winkelauflösung kommen vor allem aus Kostengesichtspunkten Teilscheiben aus unterschiedlichen Materialien in verschiedenen Ausführungen zum Einsatz.

So sind sehr dünne, galvanogeformte und fotogeätzte Teilscheiben bekannt, die zwar eine relativ gute Zentrizität der Winkelteilung zur Aufnahmebohrung aufweisen, jedoch in der erreichbaren Winkelauflösung stark begrenzt und in ihrer Handhabung sehr empfindlich sind.

Große Winkelauflösungen und hohe Winkelauflösungsgenauigkeiten lassen sich vorzugsweise mit Glasteilscheiben realisieren. Diese haben jedoch den Nachteil, daß die Aufnahmebohrung bei vertretbaren Kosten nur sehr grob toleriert hergestellt werden kann, weshalb sie im Montageprozeß nicht zur Zentrierung auf der Trägerwelle einsetzbar ist. Solche Teilscheiben werden deshalb eigens zum Zweck der Zentrierung mit einem Zentrierkreis versehen, der zur Lagejustierung der Teilscheibe auf der Trägerwelle dient. Dieser weit verbreitete Justierprozeß erfordert spezielle Visierhilfsmittel zum Betrachten des Justierkreises, wie z. B. Justiermikroskope oder Videokameras, und ist zudem auch sehr zeitaufwendig.

In Dokument DE 296 22 996 U wird eine mit einer Winkelteilung versehene Teilscheibe für Rotationsmeßsysteme beschrieben, die eine zentrale Öffnung zum Aufstecken auf eine Trägerwelle aufweist, in der eine Spanneinrichtung vorgesehen ist, die beim Aufstecken der Teilscheibe auf die Trägerwelle radial elastisch deformiert wird. Allerdings ist die Teilscheibe in diesem Dokument ausschließlich als bereits fertige Teilscheibe beschrieben, auf der auch schon die Winkelteilung aufgebracht ist: Zum Aufbringen der Winkelteilung heißt es dort nur, daß sie beispielsweise gleichzeitig mit an der Teilscheibe anzubringenden Durchbrüchen geätzt werden kann, wobei letztere im Endergebnis die elastischen Spanneinrichtungen ausbilden.

Ein Verfahren zum Anbringen einer Winkelteilung auf einer Teilscheibe für Rotationsmeßsysteme der einleitend genannten Art ist aus der JP 62 057140 A (Abstract) bekannt, bei dem die Teilscheibe mit einer zentralen, quadratischen Zentrieröffnung auf eine entsprechende Referenzwelle aufgesteckt und danach die Winkelteilung mit exakter Zentrierung zur Mittelachse der Referenzwelle auf die Teilscheibe aufgebracht wird. Danach wird die Teilscheibe abgenommen und auf eine Trägerwelle aufgesteckt. Hierbei muß zunächst durch besondere Formgebungsmaßnahmen ein formschlüssig zentrierendes Aufstecken auf die Referenzwelle sichergestellt werden, wobei die Referenzwelle in ihrer Form exakt der Form der späteren Trägerwelle entsprechen muß, was eine entsprechend exakte Formbearbeitung beider Wellen erforderlich macht.

Ausgehend hiervon liegt der Erfindung die Aufgabe zugrunde, ein Verfahren zum Anbringen einer Winkelteilung an einer Teilscheibe für Rotationsmeßsysteme der eingangs genannten Art so weiterzuentwickeln, daß eine einfache und schnelle Montage auf einer späteren Trägerwelle bei dennoch geringen Exzentrizitätsfehlern der Winkelteilung zur Drehachse der Trägerwelle trotz grober Durchmessertoleranzen der Trägerwelle möglich ist.

Erfindungsgemäß wird dies bei einem Verfahren der eingangs genannten Art dadurch erreicht, daß vor dem Aufstecken der Teilscheibe auf die Referenzwelle in deren Öffnung eine sich beim Aufstecken derselben auf die Trägerwelle radial elastisch deformierende Spanneinrichtung angebracht wird.

Durch das erfindungsgemäße Verfahren wird mit verblüffend einfachen Mitteln sichergestellt, daß wegen des durch die elastische Vorspannwirkung der Spanneinrichtung beim Aufstecken der Teilscheibe auf eine Welle eintretenden, stets gleich wirkenden Selbstzentrierungseffektes die Winkelteilung beim Aufbringen auf die Teilscheibe exakt zu derselben Drehachse zentriert wird, zu der sie auch bei einem Aufstecken der mit ihr versehenen Teilscheibe auf eine Trägerwelle zentriert ist. Denn infolge der radial elastisch deformierbaren Spanneinrichtung, die beim Aufstecken auf eine Welle deformiert wird, bleibt die von der Spanneinrichtung dabei aufgespannte virtuelle Drehachse, die senkrecht zur Teilscheibenebene verläuft, auch bei Durchmesseränderungen der Trägerwelle ortsfest und ungeändert erhalten, was für einen großen Toleranzbereich des Durchmessers der Trägerwelle gilt. Dadurch, daß die Teilscheibe mit ihrer radial elastisch deformierbaren Spanneinrichtung zuerst auf eine Referenzwelle aufgesteckt und in diesem Zustand dann die Winkelteilung exakt zur Mittelachse der Referenzwelle zentriert auf die Teilscheibe aufgebracht wird, ist eine sehr präzise Zentrierung der Winkelteilung auf der Teilscheibe zu der Mittelachse dieser Referenzwelle möglich. Wird die solchermaßen mit der Winkelteilung versehene Teilscheibe nun zu einem späteren Zeitpunkt auf eine (andere) Trägerwelle aufgesteckt, dann erfolgt durch den Selbstzentrierungseffekt der Spanneinrichtung wiederum eine Ausrichtung der auf der Teilscheibe angebrachten Winkelteilung exakt zur Mittelachse dieser (neuen) Trägerwelle, so daß die Genauigkeit der Zentrierung, mit welcher die Winkelteilung relativ zum Drehpunkt der Referenzwelle auf der Teilscheibe angebracht wurde, gleichermaßen auch hier relativ zum Drehpunkt der Trägerwelle erhalten bleibt. Die radial elastisch deformierbare Spanneinrichtung ermöglicht dies durch ihren Selbstzentrierungseffekt, der unabhängig von den Durchmessertoleranzen der jeweiligen Welle stets bewirkt, daß die Winkelteilung sowohl bei ihrem Aufbringen, wie auch im aufgebrachten Zustand zur Drehachse der jeweiligen Welle, auf der die Teilscheibe gerade sitzt, präzise zentriert ist.

Das Aufbringen der Winkelteilung auf die Teilscheibe kann auf einfache Art und Weise mit einer Vorrichtung vorgenommen werden, bei welcher die Winkelteilung hochgenau zentrisch zu der dort eingesetzten Referenzwelle aufgebracht wird. Bevorzugt entspricht diese Referenzwelle in ihrem Durchmesser dem Aufnahme-Nenndurchmesser der Trägerwelle, für welche die Teilscheibe im Einsatzfall bestimmt ist. Wird die mit dieser Winkelteilung dann versehene Teilscheibe bei der späteren Montage z. B. in einer Winkelmeßeinrichtung auf die dort vorhandene Aufnahmewelle gesteckt, zentriert die Spanneinrichtung die Teilscheibe wieder in völlig gleicher Weise zu der Drehachse dieser Welle, wodurch dann auch die Winkelteilung zur Achse dieser Trägerwelle exakt zentriert ist.

Bevorzugt wird bei dem erfindungsgemäßen Verfahren eine Teilscheibe mit einer Nabe eingesetzt, in der die zentrale Öffnung vorgesehen ist.

Vorteilhafterweise wird zum Aufbringen der Winkelteilung die Referenzwelle mit einer konzentrisch zu ihr angebrachten, aus durchsichtigem Material bestehenden Auflageplatte für die Teilscheibe eingesetzt, deren Oberfläche exakt rechtwinklig zur Mittelachse der Referenzwelle ausgerichtet und auf der ein Strichmuster für die Winkelteilung angebracht ist, wobei die Teilscheibe auf die Referenzwelle bis zur Anlage gegen die Oberfläche der Auflageplatte aufgesteckt und hiemach von der gegenüberliegenden Seite der Auflageplatte her durch diese hindurch eine Belichtung der gegen die Auflageplatte anliegenden photosensitiven Seiten der Teilscheibe zur Übertragung des Strichmusters auf diese durchgeführt wird.

Die Erfindung wird nachfolgend anhand der Zeichnung im Prinzip beispielshalber noch näher erläutert. Es zeigen:
Die Fig. 1 und 2 eine schematische Darstellung der einzelnen Schritte zur Ausführung des erfindungsgemäßen Verfahrens;
Fig. 3 eine prinzipielle Schnittdarstellung durch eine auf eine Trägerwelle eines Rotationsmeßsystems aufgesteckte Teilscheibe;
Fig. 4 die Draufsicht auf eine Ausführungsform einer mit einer Winkelteilung versehenen Teilscheibe;
Fig. 5 einen Schnitt gemäß Linie V-V in Fig. 4;
Fig. 6 eine Draufsicht auf eine weitere Ausführungsform einer Teilscheibe;
Fig. 7 einen Schnitt durch die Teilscheibe nach Fig. 6 entsprechend Schnittlinie VII-VII (in nicht auf eine Welle aufgestecktem Zustand);
Fig. 8 den Schnitt aus Fig. 7, jedoch im Zustand nach Aufstecken der Teilscheibe auf eine Welle;
Fig. 9 eine Draufsicht auf eine dritte Ausführungsform einer Teilscheibe;
Fig. 10 einen Schnitt durch die Teilscheibe nach Fig. 9 gemäß Schnittlinie X-X (im nicht-aufgesteckten Zustand der Teilscheibe), und
Fig. 11 den Schnitt durch die Teilscheibe aus Fig. 10, jedoch im auf eine Welle aufgesteckten Zustand.

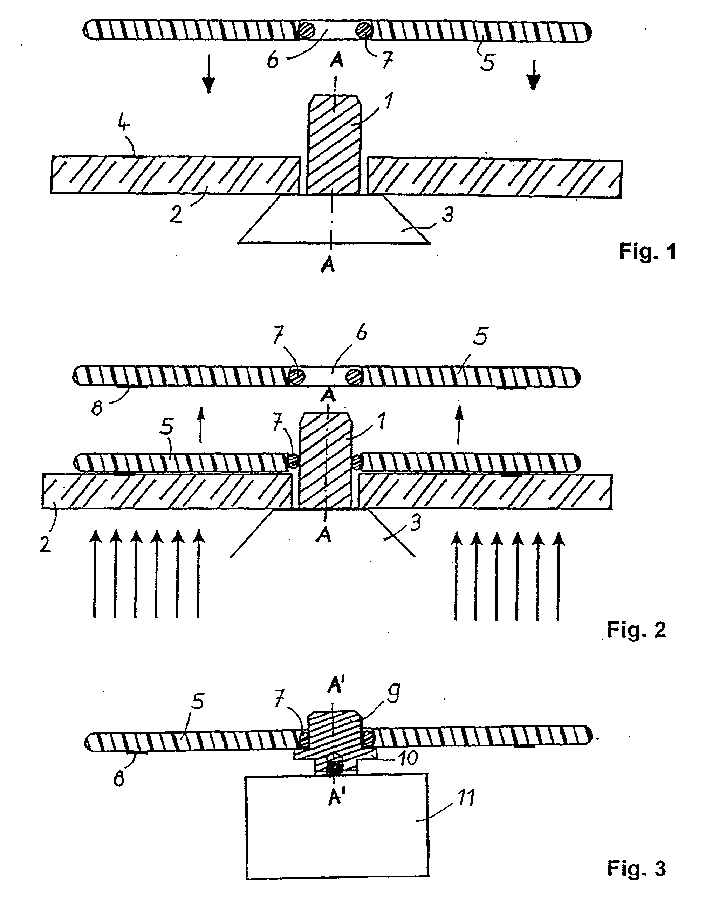

Die Darstellung der Fig. 1 und 2 zeigt in prinzipieller Illustration die bei der Ausführung des erfindungsgemäßen Verfahrens durchzuführenden Schritte.

In Fig. 1 ist (in prinzipieller Darstellung) eine für das zentrierte Aufbringen einer Winkelteilung auf eine Teilscheibe einsetzbare Vorrichtung gezeigt, soweit sie für die Darstellung des Verfahrens erforderlich ist. Diese Vorrichtung weist zentrisch eine Referenzwelle 1 sowie eine konzentrisch zu dieser angeordnete Auflageplatte 2 aus durchsichtigem Material auf, z.B. aus Glas, deren Oberfläche exakt rechtwinkelig zur Mittelachse A-A der Referenzwelle 1 ausgerichtet ist. Die Auflageplatte 2 und die Referenzwelle 1 sind gemeinsam auf einem geeigneten Support 3 befestigt.

Auf der Oberfläche der durchsichtigen Auflageplatte 2 ist genau zentrisch zur Mittelachse A-A der Referenzwelle 1 ein Strichmuster 4 für eine Winkelteilung aufgebracht.

In Fig. 1 ist oberhalb der Vorrichtung (im Schnitt) eine Teilscheibe 5 gezeigt, die mit einer zentrischen Öffnung 6 versehen ist, in der ein umlaufender, elastisch verformbarer Ring 7 in Form eines O-Ringes angebracht ist. Der elastische Ring 7 ist auf seiner radial außen liegenden Seite in geeigneter Weise mit der anliegenden Umfangswand der Öffnung 6, z.B. durch eine geeignete Klebung o.ä., verbunden.

Diese Teilscheibe 5 wird nun auf die Referenzwelle 1 bis zur Anlage gegen die Oberfläche der Auflageplatte 2 aufgesteckt, so daß der in Fig. 2 gezeigte Zustand entsteht. Beim Aufstecken der Teilscheibe 5 auf die Referenzelle 1 wird der elastische Ring 7 radial verformt, wie dies in der Darstellung von Fig. 2 erkennbar ist. Durch die radiale Verformung des elastischen Ringes 7 findet ein auf die Teilscheibe 5 wirkender Selbstzentrierungseffekt um die Mittelachse A-A der Referenzwelle 1 statt.

Anschließend wird eine Belichtung von der Unterseite der durchsichtigen Auflageplatte 2 her durchgeführt, wie dies in Fig. 2 durch die dort angebrachten Pfeile angedeutet ist. Durch diese Belichtung erfolgt in bekannter Weise auf fotochemischem oder fotomechanischem Wege eine Übertragung des Musters 4 der Winkelteilung, das auf der Teilscheibe 2 exakt zentrisch zur Mittelachse A-A der Referenzwelle 1 aufgebracht ist, auf die für die Belichtung empfindliche Unterseite der Teilscheibe 5, so daß letztlich eine fertige, mit einer aufgebrachten Winkelteilung 8 versehene Teilscheibe 5 entsteht, wie sie in Fig. 3 oberhalb der dort gezeigten Vorrichtung dargestellt ist.

Beim Aufstecken dieser Teilscheibe 5 auf eine Trägerwelle 9, die mit einem Halteflansch 10 versehen und z.B. an einen Antrieb 11 angeschlossen ist, erfolgt wiederum eine elastische, radiale Deformation des Rings 7 in der zentralen Öffnung 6 der Teilscheibe 5, wobei die in Fig. 3 unten dargestellte Endlage erreicht wird. Durch den Selbstzentrierungseffekt des elastischen Ringes 7 wird beim Aufstecken der Teilscheibe 5 auf die Trägerwelle 9 eine Relativlage der Teilscheibe 5 zur Trägerwelle erreicht, bei der die Winkelteilung 8 zu der Mittelachse A'-A' der Trägerwelle 9 ebenso exakt zentriert ist wie beim Aufbringen der Winkelteilung 8 an der Teilscheibe 5, auf der Vorrichtung gemäß Fig. 2.

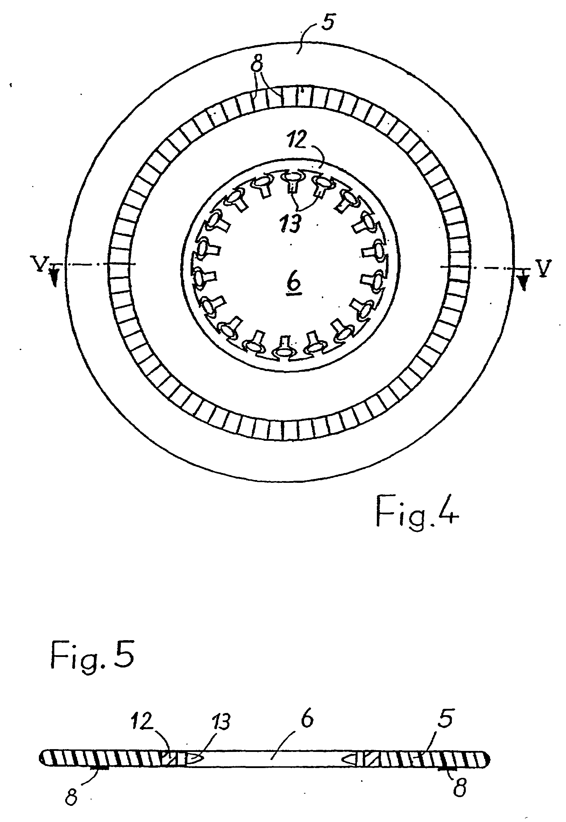

Die Fig. 4 und 5 zeigen ein anderes Ausführungsbeispiel für eine Teilscheibe 5, wobei Fig. 4 eine Draufsicht und Fig. 5 eine Schnittansicht längs der Schnittlinie V-V wiedergibt.

Bei dieser Teilscheibe 5 ist in der Öffnung 6 ein umlaufender Ring 12 befestigt, von dem aus elastisch deformierbare Noppen 13 in das Innere der Öffnung 6 vorstehen, die - ähnlich dem elastisch deformierbaren Ring 7 in dem Ausführungsbeispiel der Fig. 1 bis 3 - beim Aufstecken auf die Referenzwelle 1 oder eine Trägerwelle 9 radial elastisch deformiert werden. Dabei ist die Form dieser elastisch deformierbaren Noppen 13 gleich und sie sind auch in völlig gleichmäßiger und symmetrischer Weise um den gesamten Umfang der Bohrung 6 angebracht.

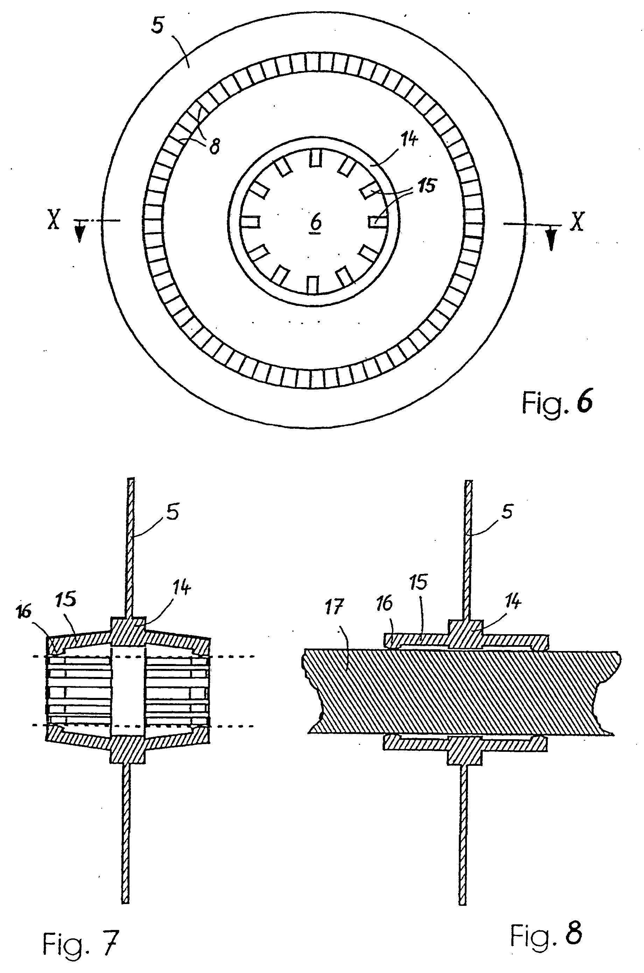

Die Fig. 6 bis 8 zeigen eine andere Ausführungsform für eine Teilscheibe 5, wobei nur bei der Darstellung der Fig. 6, die eine Draufsicht auf eine solche Teilscheibe zeigt, die Winkelteilung 8 eingezeichnet ist, die in der zeichnerischen Darstellung der Fig. 7 und 8 jedoch weggelassen wurde.

Hier ist die Teilscheibe 5 mit einer zentralen Nabe 14 versehen, innerhalb derer die Öffnung 6 ausgebildet ist. Die Spanneinrichtung ist bei dieser Ausführungsform, wie insbesondere die Schnittdarstellung der Fig. 7 (entlang Schnittlinie VII-VII in Fig. 6, bei nicht auf eine Welle aufgestecktem Zustand der Teilscheibe 5) zeigt, in Form von beidseits und symmetrisch um den Umfang der Öffnung 6 herum angeordneten, federnden Zungen 15 ausgeführt. Diese Zungen 15 sind an ihren vorstehenden Enden mit radial etwas in die Öffnung 6 hinein vorspringenden Endverdickungen 16 versehen, die auf ihrer radial vorspringenden Fläche ballig gewölbt sind und, wie die Schnittdarstellung der Fig. 8 zeigt, bei auf eine Trägerwelle 17 aufgesteckter Teilscheibe 5 gegen den Außenumfang der Welle 17 unter elastischer radialer Aufbiegung zur halternden Druckanlage kommen.

Die federnden Zungen 15 sind, wie die Fig. 7 und 8 zeigen, einstückig mit der Nabe 14 ausgeführt, die ihrerseits einstückig mit der Teilscheibe 5 ausgebildet ist, so daß die Teilscheibe 5, die Nabe 14 und die federnden Zungen 15 insgesamt ein Teil bilden, das im gezeigten Ausführungsbeispiel aus einem geeigneten Kunststoff gespritzt ist.

Im entspannten, d.h. nicht auf eine Welle aufgesteckten Zustand verlaufen die Zungen 15, wie Fig. 7 zeigt, mit einer leichten Schräge in Richtung auf das Innere der Öffnung 6 hin. Im auf die Welle 17 aufgesteckten Zustand (Fig. 8) werden die federnden Zungen 15 bei dem hier gezeigten Ausführungsbeispiel radial so weit aufgebogen, daß sie etwa parallel zur Mantelfläche der Welle 17 und damit senkrecht zur Ebene der Oberfläche der Teilscheibe 5 (und der Ebene, in der die Winkelteilung 8 liegt) ausgerichtet sind.

Die Anordnung und die Formgebung der einzelnen Zungen 15 kann dabei durchaus auch in einer anderen Art und Weise als in Fig. 7 gezeigt, vorgenommen werden. So besteht z.B die Möglichkeit, jede vorspringende Zunge 15 mit einer zu ihrem freien, verdickten Ende 16 hin zunehmenden oder abnehmenden Wanddicke auszuführen, wobei auch die Zahl der Zungen 15 um den Umfang der Öffnung 6 herum geeignet gewählt werden kann.

Gleichermaßen besteht auch die Möglichkeit, daß die Nabe 14 und die an ihr einstückig angebrachten federnden Zungen 15 ein eigenes Teil darstellen, das seinerseits in der Teilscheibe 5 sitzt und dort z.B. durch eine geeignete Klebung befestigt ist.

Die Zungen sind beidseits der Nabe 14 in gleicher Anzahl und Anordnung, somit symmetrisch, vorgesehen, so daß eine besonders genaue und feste Ausrichtung der Teilscheibe 5 relativ zur Welle 17 im aufgesteckten Zustand erreicht werden kann.

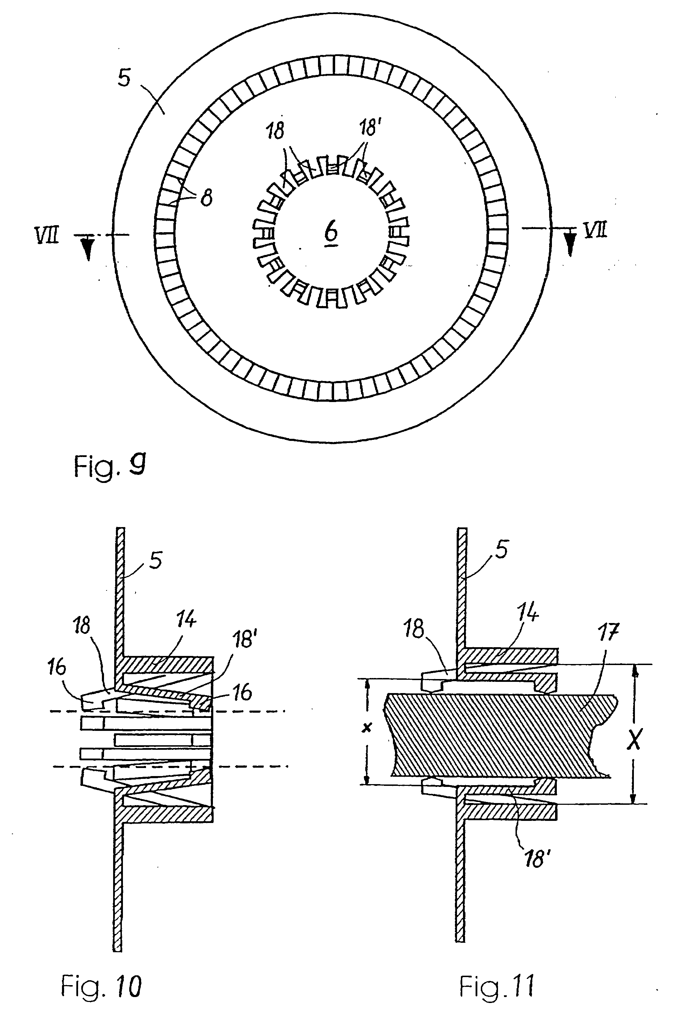

Die Fig. 9, 10 und 11 zeigen ein weiteres, drittes Ausführungsbeispiel für eine Teilscheibe 5, bei der wiederum nur in der Draufsicht der Fig. 9 die angebrachte Winkelteilung 8 dargestellt ist, die bei der Darstellung der Fig. 10 und 11 weggelassen wurde.

Hier ist die Teilscheibe 5 in ihrem zentralen Bereich wiederum mit einer Nabe 14 versehen, die jedoch nur auf eine Seite der Teilscheibe 5 vorspringt, wie dies die Schnittdarstellung der Fig. 10 (entsprechend Schnittlinie X-X in Fig. 9) zeigt.

Hierbei sind federnde Zungen 18 und 18' vorgesehen, die jedoch abwechselnd von den beiden axialen Endseiten der Nabe 14 aus schräg in Richtung zur anderen Endseite hin verlaufen, wobei insoweit auf die zeichnerische Darstellung der Fig. 10 ausdrücklich Bezug genommen wird. Wie diese Darstellung zeigt, verlaufen die einen federnden Zungen 18 von dem von der Teilscheibe 5 abstehenden Ende der Nabe 14 aus in Richtung zur gegenüberliegenden Seite schräg durch das Innere der Öffnung 6 hindurch und ragen mit ihrem verdickten Endbereich 16, der auf seiner radial innenliegenden Seite wiederum mit einer balligen Formgebung versehen ist, sogar bis über die gegenüberliegende Seite der Teilscheibe 5 hinaus.

Die anderen Zungen 18' verlaufen vom anderen axialen Ende der Nabe 14, also von der gegenüberliegenden Ebene der Teilscheibe 5 aus, und dies ausgehend von einem Ausgangsradius x, der kleiner ist als der Ausgangsradius X, mit dem die anderen Zungen 18 von der gegenüberliegenden Seite aus ablaufen (vgl. Fig. 11).

Wie die Darstellung der Fig. 10 zeigt, sind die vom vorstehenden Ende der Nabe 14 aus schräg ablaufenden federnden Zungen 18 etwas länger als die federnden Zungen 18, die vom gegenüberliegenden Ende der Nabe 14 ausgehen.

Fig. 11 zeigt nun die Teilscheibe aus Fig. 9 bzw. 10 in einem auf eine Trägerwelle 17 aufgesteckten Zustand. Wie aus Fig. 11 entnommen werden kann, sind dabei die kürzeren, vom teilscheibenseitigen Ende der Nabe 14 aus laufenden federnden Zungen 18' radial soweit aufgebogen, daß sie etwa parallel zur Mantelfläche der Trägerwelle 17 verlaufen, während die anderen Zungen 18 auch im aufgesteckten Zustand noch eine Schräganstellung zur Mantelfläche der Trägerwelle 17 aufweisen. Auf die zeichnerische Darstellung der Fig. 11 wird insoweit ausdrücklich verwiesen.

Die Schnittdarstellungen der Fig. 10 und 11 lassen erkennen, daß auch hier die Teilscheibe 5, die Nabe 14 und alle Zungen 18 bzw. 18' aus demselben Material bestehen und insgesamt einstückig ausgeführt sind, wenn möglich als Spritzgießteil. Aber auch hier besteht selbstverständlich die Möglichkeit, daß die Zungen 18 bzw. 18' aus einem anderen Material als die Nabe 14 gefertigt und in geeigneter Weise mit dieser verbunden werden oder daß die Zungen 18 und 18' zusammen mit der Nabe 14 einstückig hergestellt werden und dieses Teil geeignet mit der Trägerscheibe 5 verbunden ist.

Die Anordnung der Zungen 18 und 18' ist, wie die Draufsicht auf die Teilscheibe 5 in Fig. 9 zeigt, so vorgenommen, daß im entspannten, d.h. nicht-aufgesteckten, Zustand der Teilscheibe 5 die Enden aller Zungen 18 bzw. 18' radial gleich weit in die Öffnung 6 hineinragen. Wie schon erwähnt, ist die Anordnung der Zungen 18 und 18' alternierend, aber insgesamt gleichmäßig um den Umfang der Öffnung 6 herum.

## Patentansprüche

1. Verfahren zum Anbringen einer Winkelteilung (8) an einer Teilscheibe (5) für Rotationsmeßsysteme, wobei die Teilscheibe (5) mit einer zentralen Öffnung (6) zum Aufstecken auf eine Trägerwelle (9; 17) versehen ist, bei dem die Teilscheibe (5) auf eine Referenzwelle (1) aufgesteckt und danach die Winkelteilung (8) exakt zur Mittelachse (A-A) der Referenzwelle (1) zentriert auf die Teilscheibe (5) aufgebracht wird, ***dadurch gekennzeichnet,* daß** vor dem Aufstecken der Teilscheibe (5) auf die Referenzwelle (1) in deren Öffnung (6) eine sich beim Aufstecken derselben auf die Trägerwelle (9; 17) radial elastisch deformierende Spanneinrichtung (7; 12, 13; 15, 16; 18, 18') angebracht wird.

2. Verfahren nach Anspruch 1, **dadurch gekennzeichnet, daß** eine Referenzwelle (1) mit einem Durchmesser eingesetzt wird, der dem Aufnahme-Nenndurchmesser der Trägerwelle (9; 17), für welche die Teilscheibe (5) bestimmt ist, entspricht.

3. Verfahren nach Anspruch 1 oder 2, **dadurch gekennzeichnet, daß** zum Aufbringen der Winkelteilung (8) die Referenzwelle (1) mit einer konzentrisch zu ihr angebrachten, aus durchsichtigem Material bestehenden Auflageplatte (2) für die Teilscheibe (5) eingesetzt wird, deren Oberfläche exakt rechtwinkelig zur Mittelachse (A-A) der Referenzwelle (1) ausgerichtet und auf der ein Strichmuster (4) für die Winkelteilung (8) angebracht ist, wobei die Teilscheibe (5) auf die Referenzwelle (1) bis zur Anlage gegen die Oberfläche der Auflageplatte (2) aufgesteckt und hiernach von der gegenüberliegend Seite der Auflageplatte (2) her durch diese hindurch eine Belichtung der gegen die Auflageplatte (2) anliegenden photosensitiven Seiten der Teilscheibe (5) zur Übertragung des Strichmusters (4) auf diese durchgeführt wird.

4. Verfahren nach einem der Ansprüche 1 bis 3, **dadurch gekennzeichnet, daß** eine Teilscheibe (5) mit einer Nabe (14), in der die zentrale Öffnung (6) vorgesehen ist, eingesetzt wird.

## Claims

1. A method of arranging an angle scale (8) at an index disk (5) for rotational measurement systems, said index disk (5) being provided with a central opening (6) for mounting on a carrier shaft (9; 17), wherein the index disk (5) is mounted on a reference shaft (1), and then the angle scale (8) is arranged on the index disk (5) so as to be exactly centered with respect to the center axis (A-A) of the reference shaft (1), **characterized in that**, prior to mounting the index disk (5) on the reference shaft (1), a clamping device (7; 12, 13; 15, 16; 18, 18') is arranged in the opening (6) of the index disk (5), which clamping device (7; 12, 13; 15, 16; 18, 18') deforms elastically in the radial direction when the index disk (5) is mounted on the carrier shaft (9; 17).

2. The method according to claim 1, **characterized in that** a reference shaft (1) is used whose diameter corresponds to the nominal receiving diameter of the carrier shaft (9; 17) for which the index disk (5) is intended.

3. The method according to claim 1 or 2, **characterized in that**, in order to mount the angle scale (8), the reference shaft (1) is used with a contact plate (2) for the index disk (5), said contact plate (2) being arranged concentrically about the reference shaft (1) and consisting of a transparent material, the surface of said contact plate (2) being arranged exactly at right angles to the center axis (A-A) of the reference shaft (1) and having a ruled pattern (4) arranged thereon for the angle scale (8), wherein the index disk (5) is mounted on the reference shaft (1) so as to abut against the surface of the contact plate (2), and thereupon, an exposure of the photo-sensitive surfaces of the index disk (5), which contact the contact plate (2), is effected from the opposite side of the contact plate (2), through said contact plate (2), in order to transfer the ruled pattern (4) to the index disk (5).

4. The method according to any one of claims 1 to 3, **characterized in that** an index disk (5) is used, which comprises a hub (14), wherein the central opening (6) is provided.

## Revendications

1. Procédé pour pratiquer une division angulaire (8) sur un plateau diviseur (5) de systèmes de mesure de rotation, le plateau diviseur (5) étant pourvu d'une ouverture centrale (6) pour l'enfiler sur un arbre porteur (9 ; 17), dans lequel le plateau diviseur (5) est placé sur un arbre de référence (1) puis la division angulaire (8) est appliquée sur le plateau diviseur (5), exactement centré par rapport à l'axe médian (A-A) de l'arbre de référence (1), **caractérisé en ce qu'**avant de caler le plateau diviseur (5) sur l'arbre de référence (1), on place dans son ouverture (6), un dispositif de serrage (7 ; 12, 13; 15, 16 ; 18, 18') se déformant élastiquement radialement lorsque l'on cale ce plateau sur l'arbre porteur (9 ; 17).

2. Procédé selon la revendication 1, **caractérisé en ce qu'**on utilise un arbre de référence (1) avec un diamètre qui correspond au diamètre nominal de réception de l'arbre porteur (9 ; 17) auquel est destiné le plateau diviseur (5).

3. Procédé selon la revendication 1 ou 2, **caractérisé en ce que** pour pratiquer la division angulaire (8), l'arbre de référence (1) est utilisé avec une plaque de support (2) en matière transparente, placée concentriquement à celui-ci et destinée au plateau diviseur (5), plaque dont la surface est orientée exactement à angle droit par rapport à l'axe médian (A-A) de l'arbre de référence (1) et sur laquelle est placé un motif à traits (4) pour la division angulaire (8), le plateau diviseur (5) étant calé sur l'arbre de référence (1) jusqu'en butée contre la surface de la plaque de support (2), puis, depuis le côté opposé de la plaque de support (2), on insole à travers celle-ci les faces photosensibles, s'appliquant contre la plaque de support (2), du plateau diviseur (5), pour transmettre le motif à traits (4) à celui-ci.

4. Procédé selon l'une des revendications 1 à 3, **caractérisé en ce qu'**on utilise un plateau diviseur (5) avec un moyeu (4) dans lequel est prévue l'ouverture centrale (6).
